# EUROPÄISCHE PATENTSCHRIFT

(11) **EP 2 093 338 B1**
(45) Veröffentlichungstag und Bekanntmachung des Hinweises auf die Patenterteilung: **27.10.2010**
(21) Anmeldenummer: 09006105.2
(22) Anmeldetag: 28.07.2007
(51) Int. Cl.: E04B 1/58, E04H 9/02, E04B 1/78

(54) **Stabtragwerk zur Bildung eines Rahmens, umfassend mehrere Knoten und die Knoten verbindende Stäbe**
Lattice truss for creating a frame composed of multiple nodes and beams connecting the nodes
Structure porteuse destinée à la formation d'un cadre comprenant plusieurs noeuds et barres reliant des noeuds

(30) Priorität: 08.08.2006 DE 102006036988
(43) Veröffentlichungstag der Anmeldung: 26.08.2009
(62) Teilanmeldung aus: 07801179.8
(73) Patentinhaber: Universität Kassel, 34125 Kassel (DE)
(72) Erfinder: Kirsten, Peter Ignaz, 37318 Arenshausen (DE); Klatecki, Marc, 34466 Wolfhagen (DE); Machner, Peter, 34225 Baunatal (DE); Sporleder, Bernd, 37139 Adelebsen (DE); Wolfram, Andreas, 34225 Baunatal (DE)
(74) Vertreter: Walther, Walther & Hinz GbR

(56) Entgegenhaltungen:
- CH-A5- 678 970
- DE-A1- 1 461 000
- DE-A1- 3 335 004
- DE-A1- 19 744 001
- US-A- 3 858 989

## Beschreibung

Die vorliegende Erfindung betrifft ein quaderförmiges Stabtragwerk zur Bildung eines Rahmens, umfassend mehrere Knoten und die Knoten verbindende Stäbe.

Aus der DE 33 35 004 A1 ist ein Möbelelement mit Eckverbindungselement und Kantenstäben, die die Eckverbindungselemente zur Bildung eines räumlichen Gebildes verbinden, bekannt. Die Kantenstäbe nehmen hierbei Seitenplatten auf, um ein geschlossenes Möbelsystem, z. B. einen Schrank, zu schaffen.

Dokument DE 3335004 A1 beschreibt ein quaderförmiges Stabtragewerk mit den Merkmalen das Oberbegriffs des Anspruchs 1.

Stabtragwerke sind weiterhin auf dem Gebiet der Fachwerktechnik bekannt. Fachwerke werden üblicherweise aus Holz oder Metall hergestellt. Bekannt sind allerdings auch Tragwerke in der oben beschriebenen Form aus Beton, wobei im Bereich des Knotens die einzelnen Betonträger zusammenlaufen und zur Erhöhung der Festigkeit mit Armierungen versehen sind.

Die Querschnitte derartiger Stabtragwerke sind meistens rechteckig oder quadratisch, im Falle einer Metallkonstruktion eines Fachwerkes sind die Querschnitte der Träger insbesondere als Winkelstreben ausgebildet.

Im Zuge von Berechnungen hat sich nun allerdings herausgestellt, dass eine Erhöhung der Festigkeit eines Stabtragwerkes zur Bildung eines Rahmens, sei dieser zwei- oder dreidimensional, dadurch erreicht werden kann, dass ein solches quaderförmiges Stabtragwerk mit Knoten versehen ist, wobei jeder Stab mindestens eine in Längsrichtung des Stabes sich erstreckende Auskehlung aufweist, wobei sich die jeweilige Auskehlung bis in den Knoten fortsetzt. Unter einer Auskehlung wird eine sich in Längsrichtung erstreckende bogenförmige Ausnehmung verstanden. Wie bereits ausgeführt, konnte durch eine solche Auskehlung erreicht werden, dass die Tragfähigkeit eines Stabtragwerkes der eingangs genannten Art wesentlich erhöht wurde. Insbesondere konnte eine Erhöhung dann festgestellt werden, wenn zwei derartige Auskehlungen jeweils parallel zueinander verlaufend das Stabtragwerk, d. h. auch den einzelnen Stab, bestimmen. Der Vorteil liegt nicht nur in einer gegenüber einem Vollstab mit beispielsweise rechteckigem oder quadratischem Querschnitt erhöhten Stabilität, sondern auch an einer schlankeren und grazileren Bauweise.

Enge solche Möglichkeit eröffnet sich insbesondere dann, wenn dieses Stabtragwerk aus Beton, insbesondere einem hochfesten Beton, hergestellt wird, wie er In der DE 103 32 491 A1 beschrieben ist. Grundsätzlich spricht allerdings nichts dagegen, ein solches Stabtragwerk auch aus anderen Materialien, insbesondere aus Stahl oder Kunststoff, in der vorbeschriebenen Form herzustellen. Es hat sich in diesem Zusammenhang insbesondere herausgestellt, dass mit einem solchen aus hochfestem Beton hergestellten Stabtragwerk z. B. auch der Innere Rahmen einer Waschmaschine herstellbar ist. Der Vorteil in der Verwendung von Beton gegenüber Stahl besteht in der heutigen Zeit insbesondere darin, dass Stahl gegenüber Beton wesentlich teurer ist.

Nach einem besonderen Merkmal der Erfindung weist der Knoten mindestens zwei Ansatzelemente zur Aufnahme jeweils eines Stabes auf. Hierdurch ist ein Stabtragwerk quasi nach dem Baukastenprinzip aus vorgefertigten Teilen in nahezu beliebiger Größe herstellbar. Durch die Anordnung eines Ansatzelementes und einer korrespondierenden Ausbildung des Stabendes wird eine in zwei Raumrichtungen formschlüssige Verbindung erreicht, was zum einen der Erhöhung der Passgenauigkeit und zum anderen der Erhöhung der Stabilität dient.

Nach einem weiteren vorteilhaften Merkmal der Erfindung ist vorgesehen, dass das Ansatzelement des Knotens eine Ausklinkung aufweist, wobei der Stab endseitig einen entsprechend der Form der Ausklinkung ausgebildeten Schuh aufweist, wobei der Stab mit dem Ansatzelement im Bereich der Ausklinkung insbesondere stoffschlüssig, z. B. durch Kleben mittels Epoxidharz, verbindbar ist. Die Ausklinkung ist hierbei im Querschnitt nach Art eines ungleichschenkligen Trapezes ausgebildet, wobei die Ausklinkung entsprechend dem Verlauf der parallel zueinander verlaufenden beiden Kehlen, die im Wesentlichen in ihrer flächenmäßigen Erstreckung gleich groß sind, abfallend ausgebildet ist.

Kennzeichnend für die Erfindung ist nun, dass ein solches quaderförmiges Stabtragwerk einen Hohlkörper in alle drei Raumrichtungen elastisch nachgiebig aufnimmt. Dies vor folgendem Hintergrund: Das Stabtragwerk in Form eines Quaders kann als Bauelement eine Dimension haben, in der es in der Lage ist, Hohlkörper in Form von Gebäuderäumen aufzunehmen. Derartige quaderförmige Stabtragwerke können zu mehreren zur Erstellung eines Gebäudes hintereinander und aufeinander gesetzt werden, wobei jeder dieser Quader einen solchen Hohlkörper in Form eines Gebäuderaumes in alle drei Raumrichtungen durch ein Feder-/Dämpfersystem elastisch nachgiebig aufnimmt. Der Vorteil dieser Ausgestaltung besteht darin, dass mit einem solchen Bauwerk eine erdbebensichere Bauweise verwirklicht werden kann. Dies deshalb, weil die durch die Erschütterungen in Schwingung gesetzten starren Gebäudeteile eine verhältnismäßig geringe Masse haben und die elastisch aufgehängten Hohlkörper die Schwingungen der starren Gebäudeteile partiell kompensieren. Dies gilt dann, wenn die Erregerfrequenz und Dämpfung von Rahmen und Hohlkörper aufeinander abgestimmt werden. Hieraus wird deutlich, dass dann, wenn eine Mehrzahl solcher ein Gebäude bildende Quader durch beispielsweise Erschütterungen zur Schwingung angeregt wird, die unterschiedlichen Dämpfungseigenschaften des Feder- und Dämpfersystems das Aufschwingen eines solchermaßen hergestellten Gebäudes im Wesentlichen vermeiden.

Im Einzelnen ist vorgesehen, dass ein Feder-/Dämpfersystem im Zentrum jedes Knotens angeordnet ist. Dies deshalb, weil dort das Stabtragwerk die höchste Stabilität aufweist. Zur Aufnahme des Feder-/Dämpfersystems ist des Weiteren vorgesehen, dass das Stabtragwerk Aufnahmeelemente, beispielsweise in Form von Ösen, aufweist. Insbesondere ist vorgesehen, dass die Aufnahmeelemente im Bereich der mittleren Kehllinie angeordnet sind. Denkbar ist ebenfalls die Anordnung von Buchsen zum Einlegen oder Einschrauben des Feder-/Dämpfersystems.

Anhand der Zeichnungen wird die Erfindung nachstehend beispielhaft näher erläutert.
- Figur 1: zeigt den Knoten eines Stabtragwerkes mit drei Ansatzelementen zur Verbindung mit jeweils einem Stab;
- Figur 2: zeigt eine weitere Ansicht auf den Knoten gemäß Figur 1;
- Figur 3: zeigt ein quaderförmiges Stabtragwerk mit elastisch aufgehängtem Hohlkörper als Teil eines Gebäudes.

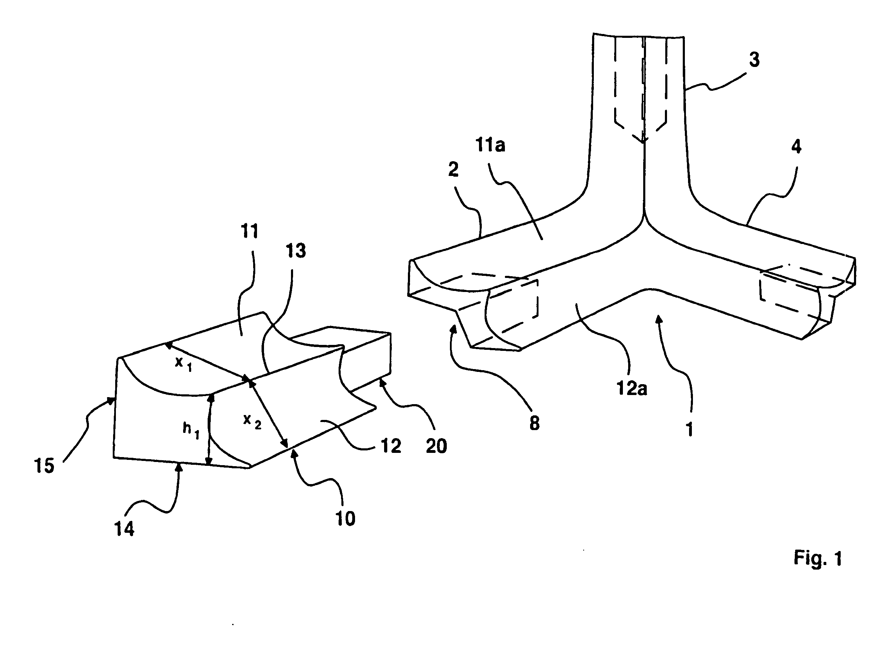

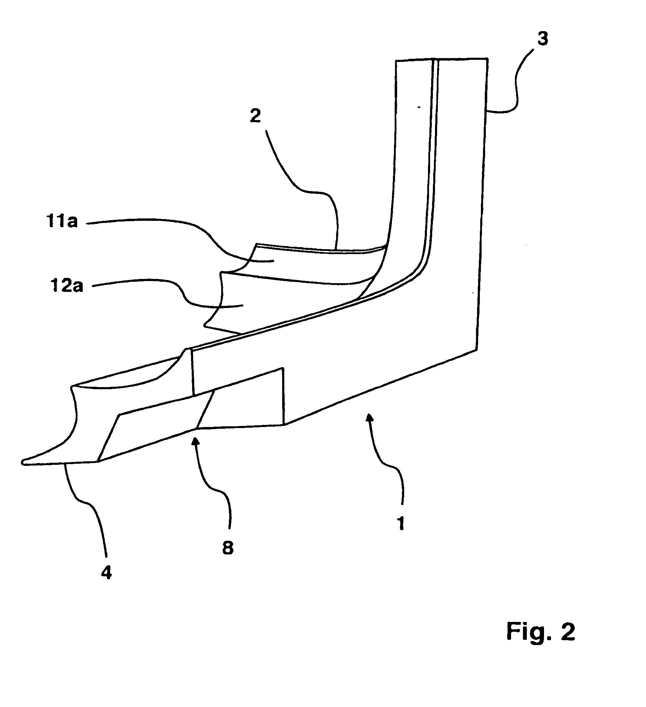

Der in den Figuren 1 und 2 dargestellte Knoten 1 besitzt drei Ansatzelemente 2, 3 und 4, die vom Grundsatz her gleich ausgebildet sind und ineinanderlaufend den Knotens 1 beiden. Die durch den Knoten 1 aufgenommenen Stäbe sind mit 10 bezeichnet. Ein solcher Stab 10 weist zwei parallel zueinander verlaufende Auskehlungen 11 und 12 auf, wobei die Auskehlungen 11 und 12 durch eine Kehllinie 13 miteinander in Verbindung stehen. Die Höhe h₁ der Kehllinie bezogen auf die Flanke 14 beträgt etwa 2/3 der Höhe der Flanke 15. Im Übrigen gilt, dass die Auskehlungen 11 und 12 im Wesentlichen gleich sind. Das bedeutet, dass die Breite x₁ der Auskehlung 11 gleich der Breite x₂ der Auskehlung 12 ist.

Wie sich ebenfalls aus Figur 1 ergibt, besitzt ein solcher Stab einen Schuh 20, dessen Form korrespondierend zu der Ausklinkung 8 in dem Ansatzelement 2 bis 4 des Knotens 1 getroffen ist, d. h. im Querschnitt nach Art eines ungleichschenkligen Trapezes ausgebildet ist. Die Ausbildung des Knotens ist in Bezug auf die Auskehlungen 11 und 12 genauso gehalten wie die des Stabes 10. Wesentlich ist, dass die Auskehlungen 11 a und 12a in den Knoten 1, ausgehend von den Ansatzelementen 2, 3 und 4, ineinander laufen, wie sich dies sehr anschaulich aus Figur 1, aber auch aus Figur 2 ergibt.

Die Erhöhung der Stabilität eines in dieser Weise ausgebildeten Stabtragwerkes gegenüber einem Stabtragwerk, das Zusatzelemente und Stäbe mit rechteckigem und quadratischem Querschnitt aufweist, besteht darin, dass durch die Wölbungen auf Grund der Auskehlungen eine Erhöhung der Stabilität ähnlich einem Brückengewölbe oder einem Gebäudegewölbe erzeugt wird. Dies gilt insbesondere für die Gestalt des Knotens, der durch den von den Ansatzelementen eingeschlossenen Bereich nach Art eines Gewölbes ausgebildet ist, wodurch sich die gegenüber einer reinen Rechteckform erhöhte Stabilität ergibt.

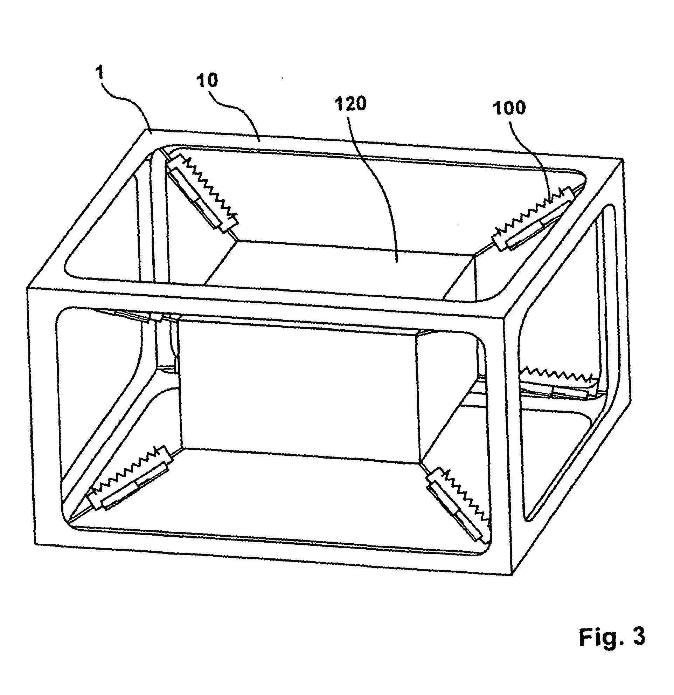

Das quaderförmige Stabtragwerk gemäß Fig. 3 umfasst mehrere Knoten 1, die durch Stäbe 10 miteinander in Verbindung stehen. Im Bereich der Knoten 1 sind Feder/-Dämpfersysteme 100 angeordnet, die den mit 120 bezeichneten Hohlkörper in alle drei Raumrichtungen elastisch beweglich dämpfend aufnehmen. Aus solchen quaderförmigen Stabtragwerken gemäß Fig. 3 kann ein gesamtes Gebäude erstellt werden, in dem nämlich mehrere derartiger quaderförmigen Stabtragwerke nebeneinander und/oder übereinander angeordnet werden und miteinander verbunden sind, wenn die einzelnen quaderförmigen Stabtragwerke Hohlkörper 120 aufnehmen, die als Wohnräume ausgebildet sind. Insbesondere wenn die Dämpfer des Feder-/Dämpfersystems 100 eines Stabtragwerkes eine zueinander unterschiedliche Dämpfungskennlinie aufweisen, besteht nicht die Gefahr, dass bei Erschütterungen, beispielsweise als Folge eines Erdbebens, sich die im quaderförmigen Stabtragwerk elastisch nachgiebig gelagerten Hohlkörper aufgrund etwaiger Resonanzen aufschwingen. Vielmehr ist denkbar, dass bei geeigneter Wahl der Dämpfungskennlinie der einzelnen Systeme eines jeden quaderförmigen Stabtragwerkes sich die auftretenden Schwingungen in dem hieraus hergestellten Gebäude zumindest partiell kompensieren, da sie sich teilweise gegenseitig auslöschen. Hierbei ist zu berücksichtigen, dass die Masse und die Federkennlinie die Resonanzfrequenz bestimmen und der Dämpfer eines solchen Systems den Schwingungsweg in einem Frequenzbereich.

## Patentansprüche

1. Quaderförmiges Stabtragwerk zur Bildung eines Rahmens, umfassend mehrere Knoten (1) und die Knoten (1) verbindende Stäbe (10), wobei jeder Stab (10) mindestens eine in Längsrichtung des Stabes (10) sich erstreckende Auskehlung (11, 12) aufweist, wobei sich die jeweilige Auskehlung (11, 12) bis in den Knoten (1) fortsetzt, **dadurch gekennzeichnet, dass** das quaderförmige Stabtragwerk einen Hohlkörper (120) in alle drei Raumrichtungen elastisch nachgiebig aufnimmt.

2. Stabtragwerk nach Anspruch 1,
**dadurch gekennzeichnet,**
**dass** der Knoten (1) mindestens zwei Ansatzelemente (2, 3, 4) zur Aufnahme jeweils eines Stabes (10) aufweist.

3. Stabtragwerk nach Anspruch 1,
**dadurch gekennzeichnet,**
**dass** der Stab (10) zwei parallel zueinander verlaufende Auskehlungen (11, 12) aufweist, wobei zwischen den beiden Auskehlungen (11, 12) eine mittlere Kehllinie verläuft.

4. Stabtragwerk nach Anspruch 1,
**dadurch gekennzeichnet,**
**dass** sich durch die Auskehlung (11, 12) eine Kehllinie (13) ergibt, die eine geringere Höhe (h₁) als die Seitenflanke (15) des Stabes (10) aufweist.

5. Stabtragwerk nach Anspruch 4,
**dadurch gekennzeichnet,**
**dass** die Höhe (h₁) der Kehllinie (13) etwa 2/3 der Höhe der Seitenflanke (15) des Stabes (10) beträgt.

6. Stabtragwerk nach Anspruch 2,
**dadurch gekennzeichnet,**
**dass** das Ansatzelement (2, 3, 4) des Knotens (1) eine Ausklinkung (8) aufweist, wobei der Stab (10) endseitig einen entsprechend der Form der Ausklinkung (8) ausgebildeten Schuh (20) aufweist, wobei der Schuh (20) mit dem Ansatzelement (2, 3, 4) im Bereich der Ausklinkung (8) insbesondere stoffschlüssig, z. B. durch Kleben, verbindbar ist.

7. Stabtragwerk nach Anspruch 6,
**dadurch gekennzeichnet,**
**dass** die Ausklinkung (8) im Querschnitt nach Art eines ungleichschenkligen Trapezes ausgebildet ist.

8. Stabtragwerk nach Anspruch 1,
**dadurch gekennzeichnet,**
**dass** die Auskehlungen (11, 12) gleich groß sind.

9. Stabtragwerk nach Anspruch 1,
**dadurch gekennzeichnet,**
**dass** das quaderförmige Stabtragwerk mehrere Feder-/Dämpfersysteme (100) aufweist, an denen der Hohlkörper (120) aufgehängt ist.

10. Stabtragwerk nach Anspruch 9,
**dadurch gekennzeichnet,**
**dass** die Feder-/Dämpfersysteme (100) im Zentrum eines Knotens (1) angeordnet sind.

11. Stabtragwerk nach Anspruch 9,
**dadurch gekennzeichnet,**
**dass** zur Aufnahme der Feder-/Dämpfersysteme (100) das Stabtragwerk Aufnahmeelemente aufweist.

12. Stabtragwerk nach Anspruch 11,
**dadurch gekennzeichnet,**
**dass** die Aufnahmeelemente im Bereich der mittleren Kehllinie (13) angeordnet sind.

13. Stabtragwerk nach Anspruch 9,
**dadurch gekennzeichnet,**
**dass** die Feder-/Dämpfersysteme (100) in ihrer Dämpfungskennlinie einstellbar sind.

14. Stabtragwerk nach Anspruch 1,
**dadurch gekennzeichnet,**
**dass** sowohl die Stäbe (10) als auch die Knoten (1) aus Beton ausgebildet sind.

## Claims

1. Block-shaped lattice framework for forming a frame, comprising a plurality of junction elements (1) and rods (10) connecting the junction elements (1), wherein each rod (10) has at least one flute (11, 12) extending in longitudinal direction of the rod (10), wherein the respective flute (11, 12) continues up to the junction elements (1), **characterised in that** the block-shaped lattice framework receives a hollow body (120) resiliently flexible in all three dimensions.

2. Lattice framework according to claim 1, **characterised in that** the junction elements (1) have at least two attachment elements (2, 3, 4) each for reception of a respective rod (10).

3. Lattice framework according to claim 1, **characterised in that** the rod (10) has two mutually parallelly extending flutes (11, 12), wherein a centre flute line runs between the two flutes (11, 12).

4. Lattice framework according to claim 1, **characterised in that** a flute line (13) having a lower height (h₁) than the side flanks (15) of the rod (10) arises due to the flute (11, 12).

5. Lattice framework according to claim 4, **characterised in that** the height (h₁ of the flute line (13) is approximately 2/3 of the height of the side flank (15) of the rod (10).

6. Lattice framework according to claim 2, **characterised in that** the attachment element (2, 3, 4) of the junction element (1) has a notch (8), wherein the rod (10) has at the end a shoe (20) constructed in correspondence with the shape of the notch (8), wherein the shoe (20) is connectible with the attachment element (2, 3, 4) in the region of the notch (8) by, in particular, material couple, for example by gluing.

7. Lattice framework according to claim 6, **characterised in that** the notch (8) is formed in cross-section in the manner of an unequalsided trapezium.

8. Lattice framework according to claim 1, **characterised in that** the flutes (11, 12) are of equal size.

9. Lattice framework according to claim 1, **characterised in that** the block-shaped lattice framework comprises a plurality of spring systems / damper systems (100) at which the hollow body (12) is suspended.

10. Lattice framework according to claim 9, **characterised in that** the spring systems / damper systems (100) are arranged in the centre of a junction element (1).

11. Lattice framework according to claim 9, **characterised in that** the lattice framework has mounting elements for mounting the spring systems / damper systems (100).

12. Lattice framework according to claim 11, **characterised in that** the mounting elements are arranged in the region of the centre flute line (13).

13. Lattice framework according to claim 9, **characterised in that** the spring systems / damper systems (100) are adjustable in their damping characteristic.

14. Lattice framework according to claim 1, **characterised in that** not only the rods (10), but also the junction elements (1) are constructed from concrete.

## Revendications

1. Ossature porteuse parallélépipédique à barres destinée à former un châssis, comprenant plusieurs noeuds (1) et des barres (10) qui relient les noeuds (1), dans laquelle chaque barre (10) comporte au moins une cannelure (11, 12) s'étendant dans la direction longitudinale de la barre (10), et la cannelure correspondante (11, 12) se prolonge jusque dans les noeuds (1),
**caractérisée en ce que**
l'ossature porteuse parallélépipédique à barres reçoit un corps creux (120) avec possibilité de céder élastiquement dans les trois directions de l'espace.

2. Ossature porteuse à barres selon la revendication 1,
**caractérisée en ce que**
le noeud (1) comporte au moins deux branches (2, 3, 4) destinées à recevoir chacune une barre (10).

3. Ossature porteuse à barres selon la revendication 1,
**caractérisée en ce que**
la barre (10) comporte deux cannelures (11, 12) s'étendant parallèlement entre elles, une ligne de cannelure médiane s'étendant entre les deux cannelures (11, 12).

4. Ossature porteuse à barres selon la revendication 1,
**caractérisée en ce que,**
sous l'effet de la cannelure (11, 12), il se forme une ligne de cannelure (13) qui a une hauteur (h₁) inférieure à celle du flanc latéral (15) de la barre (10).

5. Ossature porteuse à barres selon la revendication 4,
**caractérisée en ce que**
la hauteur (h₁) de la ligne de cannelure (13) représente environ les 2/3 de la hauteur du flanc latéral (15) de la barre (10).

6. Ossature porteuse à barres selon la revendication 2,
**caractérisée en ce que**
l'élément formant branche (2, 3, 4) du noeud (1) comporte une entaille (8), la barre (10) présentant à son extrémité un talon (20) dont la configuration correspond à la forme de l'entaille (8), le talon (20) pouvant être relié à l'élément formant branche (2, 3, 4) dans la région de l'entaille (8), en particulier par union de matière, par exemple par collage.

7. Ossature porteuse à barres selon la revendication 6,
**caractérisée en ce que,**
en section transversale, l'entaille (8) a la configuration d'un trapèze à côtés inégaux.

8. Ossature porteuse à barres selon la revendication 1,
**caractérisée en ce que**
les entailles (11, 12) sont de même dimension.

9. Ossature porteuse à barres selon la revendication 1,
**caractérisée en ce que**
l'ossature porteuse parallélépipédique à barres comporte plusieurs systèmes ressort-amortisseur (100) auxquels le corps creux (120) est suspendu.

10. Ossature porteuse à barres selon la revendication 9,
**caractérisée en ce que**
les systèmes ressort-amortisseur (100) sont disposés au centre d'un noeud (1).

11. Ossature porteuse à barres selon la revendication 9,
**caractérisée en ce que**
l'ossature porteuse à barres comporte des éléments de logement pour recevoir les systèmes ressort-amortisseur (100) de l'ossature porteuse à barres.

12. Ossature porteuse à barres selon la revendication 11,
**caractérisée en ce que**
les éléments de logement sont disposés dans la région de la ligne de cannelure médiane (13).

13. Ossature porteuse à barres selon la revendication 9,
**caractérisée en ce que**
les systèmes ressort-amortisseur (100) sont réglables en caractéristique d'amortissement.

14. Ossature porteuse à barres selon la revendication 1,
**caractérisée en ce que**
les barres (10) aussi bien que les noeuds (1) sont en béton.
